# FASCICULE DE BREVET EUROPEEN

(11) **EP 3 109 885 B1**
(45) Date de publication et mention de la délivrance du brevet: **28.02.2018**
(21) Numéro de dépôt: 16175916.2
(22) Date de dépôt: 23.06.2016
(51) Int. Cl.: H01J 1/70, C09K 11/77, C09K 11/58, H01J 63/04, H01J 63/06, H01J 29/28, H01J 3/02, H01J 29/18

(54) **DISPOSITIF CATHODOLUMINESCENT A RENDEMENT AMELIORE**
KATHODOLUMINESZENZ-VORRICHTUNG MIT VERBESSERTER LEISTUNG
CATHODE-LUMINESCENT DEVICE WITH IMPROVED EFFICIENCY

(30) Priorité: 25.06.2015 FR 1555887
(43) Date de publication de la demande: 28.12.2016
(73) Titulaire: Commissariat à l'énergie atomique et aux énergies alternatives, 75015 Paris (FR)
(72) Inventeur: LE BLEVENNEC, Gilles, 38190 BERNIN (FR); CELLE, Caroline, 42700 FIRMINY (FR)
(74) Mandataire: GIE Innovation Competence Group

(56) Documents cités:
- EP-A1- 0 526 663
- EP-A2- 2 194 561
- US-A1- 2010 156 305

## Description

### DOMAINE TECHNIQUE

Le domaine de l'invention est celui des dispositifs cathodoluminescents, c'est-à-dire des dispositifs comportant une couche réalisée en un matériau adapté à absorber des électrons incidents et à émettre en réponse un rayonnement lumineux.

### ÉTAT DE LA TECHNIQUE ANTÉRIEURE

Les dispositifs cathodoluminescents sont largement utilisés dans le domaine de l'éclairage, de l'affichage voire des imageurs. Ils comportent une couche réalisée en un matériau luminescent adapté à absorber des électrons incidents et à émettre en réponse un rayonnement lumineux. Cette couche luminescence est habituellement disposée dans une enceinte sous vide où une source d'électrons émet un faisceau d'électrons qui vient impacter une face, dite face avant, de ladite couche luminescente. Le rayonnement lumineux émis par la couche luminescente est ensuite extrait hors de la couche et forme le signal optique de sortie du dispositif cathodoluminescent.

Dans le but d'éviter que de la lumière générée dans la couche luminescente ne soit rétrodiffusée à l'intérieur de l'enceinte sans contribuer au signal de sortie, ce qui diminue alors le taux de collection optique de la couche luminescente, c'est-à-dire le rapport entre le nombre de photons collectés pour former le signal de sortie sur le nombre de photons générés, une couche mince en aluminium est généralement déposée sur la face avant de la couche luminescente. L'épaisseur de cette couche mince doit être suffisante pour assurer la fonction de réflexion optique sans toutefois être trop importante pour limiter l'absorption partielle de l'énergie des électrons incidents qui vient réduire le taux de transmission électronique, c'est-à-dire le rapport entre le nombre d'électrons transmis dans la couche luminescente et d'énergie suffisante pour provoquer l'émission de lumière sur le nombre d'électrons incidents. Le taux de collection optique et le taux de transmission électronique participent à définir le rendement global du dispositif cathodoluminescent défini ici comme le rapport entre le nombre de photons générés et participant au signal optique de sortie sur le nombre d'électrons incidents.

Le document WO2013/102883 décrit un exemple de dispositif cathodoluminescent, ici une ampoule, dans lequel une couche mince d'aluminium recouvre une couche luminescente ferroélectrique et assure les fonctions de polarisation, d'évacuation des charges parasites et de réflecteur optique vis-à-vis des photons générés dans la couche luminescente. En effet, outre la fonction de réflexion optique mentionnée précédemment, la couche d'aluminium peut être polarisée pour générer avec la source d'électrons à l'intérieur de l'enceinte sous vide un champ électrique permettant d'orienter et d'accélérer les électrons en direction de la couche luminescente. De plus, la couche luminescente présentant habituellement une faible conductivité électrique, des charges électriques négatives résiduelles peuvent être présentes au niveau de la face avant, ce qui crée une diminution du potentiel électrique au niveau de cette même face voire une répulsion électrostatique, qui diminue l'énergie cinétique des électrons incidents. Le rendement global du dispositif cathodoluminescent peut ainsi être dégradé.

### EXPOSÉ DE L'INVENTION

L'invention a pour objectif de remédier au moins en partie aux inconvénients de l'art antérieur, et plus particulièrement de proposer un dispositif cathodoluminescent présentant un rendement global amélioré. Pour cela, l'objet de l'invention est un dispositif cathodoluminescent comportant une couche luminescente présentant une première face, dite face avant, destinée à recevoir des électrons incidents, ladite couche luminescente étant adaptée à absorber des électrons incidents et à émettre en réponse un rayonnement lumineux, caractérisé en ce que la face avant de la couche luminescente est revêtue d'une couche comportant des nanofils électriquement conducteurs.

Certains aspects préférés mais non limitatifs de ce dispositif cathodoluminescent sont les suivants :

La couche de nanofils peut présenter une densité surfacique de nanofils comprise entre 0.2 et 1, et de préférence inférieure à 1.

La couche de nanofils peut être formée d'un réseau percolant de nanofils électriquement conducteurs, et être destinée à être électriquement connectée à une source de potentiel électrique.

La couche de nanofils peut présenter une résistance par carré inférieure ou égale à 500Ω/sq, et de préférence inférieure ou égale à 100Ω/sq.

La longueur moyenne des nanofils peut être supérieure à l'épaisseur moyenne de la couche de nanofils.

Les nanofils peuvent présenter un rapport d'aspect, défini comme le rapport entre une longueur moyenne sur un diamètre moyen, supérieur ou égal à 10, et de préférence supérieur ou égal à 100.

Les nanofils peuvent être réalisés en un matériau métallique choisi parmi l'or, l'argent et le cuivre ou en un matériau choisi parmi l'ITO et l'AZO.

Les nanofils peuvent être adaptés à émettre un rayonnement lumineux dans une première longueur d'onde lorsqu'ils sont excités par lesdits électrons incidents, et la couche luminescente être adaptée à absorber un rayonnement lumineux émis par les nanofils dans une première longueur d'onde et à émettre en réponse un rayonnement lumineux à une seconde longueur d'onde dite de luminescence supérieure à ladite première longueur d'onde.

Le dispositif cathodoluminescent peut comprendre une source d'électrons adaptée à émettre un faisceau d'électrons en direction de la face avant de la couche luminescente.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique en coupe d'un exemple de système cathodoluminescent comportant une couche luminescente recouverte d'une couche de nanofils électriquement conducteurs ;
la figure 2 est une vue de dessus d'un exemple de couche de nanofils formée de nanofils d'argent.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures.

L'invention porte sur un dispositif cathodoluminescent. Par cathodoluminescence, on entend la propriété d'un matériau de générer un rayonnement lumineux, par exemple dans l'UV, le visible et/ou l'infrarouge, en réponse à l'absorption d'électrons incidents. Le dispositif cathodoluminescent peut être utilisé dans différents types de système optique, par exemple des tubes cathodiques, des écrans à effet de champ, des jumelles de vision nocturne voire des ampoules à cathodoluminescence.

L'invention porte également sur des nanofils électriquement conducteurs. Par « nanofil », on entend une structure tridimensionnelle de forme allongée dont au moins deux dimensions dites transversales sont de l'ordre de quelques nanomètres à quelques centaines de nanomètres, par exemple sont comprises entre 2nm et 500nm, et de préférence entre 2nm et 150nm, la troisième dimension dite longitudinale étant supérieure aux dimensions transversales, de préférence au moins 2 fois, voire au moins 5 fois, et de préférence au moins 20 fois voire au moins 100 fois. A titre illustratif, dans certains modes de réalisation, les nanofils présentent une dimension transversale, ou diamètre, de l'ordre de 60nm et une dimension longitudinale, ou longueur, de l'ordre de 1µm, voire de l'ordre de 10µm.

Les nanofils peuvent présenter une section transversale de forme circulaire, ovale, voire polygonale. La forme longitudinale des nanofils peut être cylindrique, conique, voire tronconique. Par diamètre d'un nanofil, on entend la valeur moyenne des deux dimensions transversales le long de la dimension longitudinale du nanofil.

Les nanofils sont réalisés en un matériau électriquement conducteur, par exemple en un matériau métallique, de préférence choisi parmi Ag, Cu, Au, Pt, Pd, Ni, Co, Rh, In, Ru, Fe, CuNi, et les mélanges de deux ou plus de ces matériaux, et de préférence encore choisi parmi Ag, Au ou Cu. Les nanofils peuvent être réalisés en un matériau non métallique, tel que, par exemple l'ITO (pour *Indium tin oxide,* en anglais), ou l'AZO (pour *aluminium doped zinc oxide,* en anglais).

Une couche comportant des nanofils est une couche formée d'une pluralité de nanofils qui s'étendent sur la surface d'un support et définissent les propriétés optiques et électriques de la couche. La couche de nanofils se distingue donc d'une couche mince d'aluminium mentionnée précédemment en ce que le matériau des nanofils ne s'étend pas continûment dans les trois dimensions de la couche. La couche d'aluminium est au contraire une couche qui peut être qualifiée de pleine dans le sens où l'aluminium s'étend continûment dans les trois dimensions de la couche. Pour une couche de nanofils, on peut définir une densité surfacique de nanofils AF (pour *area fraction,* en anglais) comme étant le produit de la surface projetée d'un nanofil et du nombre de nanofils par unité de surface. On comprend que, pour une densité surfacique de nanofils inférieure à 1, la couche de nanofils comporte au moins une zone qui ne comporte pas de nanofils suivant l'épaisseur de la couche.

Dans la suite de la description, les termes « sensiblement », « approximativement » s'étendent « à 10% près ». Par ailleurs, les termes « compris entre ... et ... », « allant de ... à ... » signifient que les bornes sont incluses, sauf mention contraire.

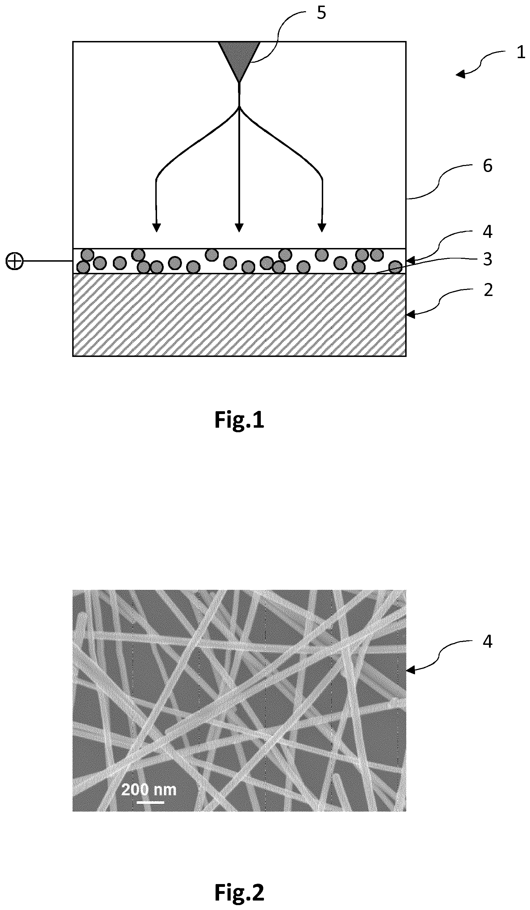

La figure 1 illustre un exemple de dispositif cathodoluminescent 1 pouvant être utilisé dans un système du type tube cathodique, écran à effet de champ, jumelle de vision nocturne voire ampoule à cathodoluminescence.

Le dispositif cathodoluminescent 1 comprend une couche luminescente 2 présentant une première face 3, dite face avant, destinée à recevoir des électrons incidents, ladite couche luminescente 2 étant réalisée en un matériau propre à absorber des électrons incidents et à émettre en réponse un rayonnement lumineux. La couche luminescente 2 est revêtue au niveau de sa face avant 3 par une couche 4 formée de nanofils électriquement conducteurs. L'empilement formé de la couche de nanofils 4 et de la couche luminescente 3 est disposé en regard d'une source d'électrons 5 adaptée à émettre un faisceau d'électrons en direction de cet empilement. Le tout est disposé ici dans une enceinte sous vide 6.

La couche luminescente 2 peut être réalisée en un ou plusieurs matériaux luminescents, ou phosphores, choisis en fonction de la longueur d'émission souhaitée et du type d'application. Ainsi, à titre illustratif, dans le cas des intensificateurs d'image, le matériau luminescent peut être, par exemple, un phosphore de composition standard P43, c'est-à-dire du Gd2O2S:Tb émettant dans le vert à 545nm environ, ou un phosphore de composition P22 formé d'un mélange de ZnS:Ag, de (ZnCd)S:Cu et de Y2O2S:Eu émettant également dans le vert. A titre d'exemple encore, pour une application dans un tube à rayons cathodiques, un phosphore de type YAG (yttrium-aluminium-grenat) dopé terbium ou cérium peut convenir.

La couche luminescente 2 peut être réalisée à la surface d'un support (non représenté), par exemple une enveloppe en verre d'une ampoule cathodoluminescente ou une plaque de fibres optiques assemblées en faisceau dans le cas d'un intensificateur de lumière. La couche luminescente peut être obtenue par des techniques connues de l'homme du métier telles que la sédimentation, le brossage, la décantation, la pulvérisation ou autre. Elle peut présenter une épaisseur moyenne de l'ordre de quelques microns à quelques centaines de microns, par exemple de l'ordre de 10µm.

Le dispositif cathodoluminescent comprend en outre une couche de nanofils électriquement conducteurs, qui revêt la face avant de la couche luminescente.

Selon un premier mode de réalisation, la couche de nanofils électriquement conducteurs est une couche optiquement réflectrice qui assure une fonction de réflexion optique du rayonnement lumineux émis par la couche luminescente en direction de la face avant.

Par couche réflectrice optique, on entend une couche adaptée à réfléchir au moins en partie les photons émis par la couche luminescente. En d'autres termes, la réflectance de la couche de nanofils est non nulle à la longueur d'onde du rayonnement lumineux émis par la couche luminescente, et plus précisément est supérieure ou égale à 15%, voire supérieure ou égale à 50% et de préférence supérieure ou égale à 80%. A titre d'exemple, pour des nanofils présentant un diamètre moyen inférieur à la longueur d'onde du rayonnement lumineux émis par la couche luminescente, par exemple de l'ordre de 60nm de diamètre pour une longueur d'onde de l'ordre de 500nm, une densité surfacique de nanofils de l'ordre de 50% conduit à une réflectance de l'ordre de 50%.

Par couche réflectrice formée de nanofils, on entend une couche comprenant une pluralité de nanofils dont le matériau des nanofils et la densité surfacique AF sont choisis pour obtenir la réflectance désirée.

Les nanofils sont ici réalisés en matériau métallique, de préférence choisi parmi Ag, Cu, Au, Pt, Pd, Ni, Co, Rh, In, Ru, Fe, CuNi, et les mélanges de deux ou plus de ces matériaux, et de préférence encore choisi parmi Ag, Au ou Cu.

On comprend que, plus la densité surfacique AF est élevée, plus importante sera la réflectance de la couche de nanofils vis-à-vis du rayonnement lumineux émis par la couche luminescente, et donc le taux de collection optique.

De plus, la densité surfacique AF de nanofils influe sur le taux de transmission électronique vis-à-vis des électrons incidents. En effet, une densité surfacique AF égale à 1 revient à former une couche dont les nanofils recouvrent continûment la surface de la face avant de la couche luminescente. On comprend qu'en diminuant la densité surfacique AF, on forme au moins une zone qui ne comporte pas de nanofils suivant l'épaisseur de la couche de nanofils. Ainsi, les électrons incidents qui traversent cette zone ne rencontrent pas de nanofils et voient donc leur énergie cinétique pas ou peu diminuée lorsqu'ils impactent la couche luminescente. Le taux de transmission électronique est ainsi amélioré dans la mesure où davantage d'électrons sont transmis d'une part et davantage d'électrons transmis ont leur énergie cinétique sensiblement préservée d'autre part.

Ainsi, à titre d'exemple, en comparaison avec une couche pleine en un matériau métallique présentant un taux de transmission des électrons incidents de 50%, une couche de nanofils réalisés en un matériau métallique identique à celui de la couche pleine présente un taux de transmission électronique qui peut s'écrire en première approximation : 1 - 0.5 x AF. Ainsi, pour une densité surfacique AF de 0.9 ou de 0.2, le taux de transmission électronique sera de 55% ou de 90%, respectivement.

De préférence, la densité surfacique de nanofils est comprise entre 0.2 et 1, et avantageusement inférieure à 1 pour ainsi augmenter le taux de transmission électronique tout en maintenant une réflectance optique suffisante. A titre d'exemple, comme précisé précédemment, une densité surfacique de nanofils de l'ordre de 0,5 conduit à une réflectance optique de l'ordre de 50%.

Le fonctionnement d'un exemple de dispositif cathodoluminescent est maintenant décrit en référence à la figure 1.

A l'intérieur de l'enceinte sous vide 6, la source d'électrons 5 émet un faisceau d'électrons en direction de la couche luminescente 2 dont la face avant 3 est recouverte par la couche réflectrice 4 de nanofils métalliques.

Le faisceau d'électrons vient impacter la couche de nanofils 4, dont une partie des électrons est transmise par la couche de nanofils 4 dans la couche luminescente 2, selon le taux de transmission électronique du dispositif cathodoluminescent. Lorsque la densité surfacique de nanofils est inférieure à 1, le taux de transmission électronique est augmenté dans la mesure où davantage d'électrons traversent la couche de nanofils d'une part, et davantage d'électrons sont transmis avec une énergie suffisante pour être susceptibles de provoquer la formation de paires électron-trou d'autre part.

Une partie des électrons énergétiques introduits dans la couche luminescente 2 entraîne la formation de paires électron-trou dans le matériau luminescent, dont une partie se recombine de manière radiative en émettant un rayonnement lumineux à une longueur d'onde caractéristique du matériau luminescent.

Enfin, au moins une partie du rayonnement lumineux généré par la couche luminescente 2 forme un signal optique de sortie qui peut être, par exemple, extrait au niveau de la face de la couche luminescente opposée à la face avant ou collecté par des fibres optiques dont une extrémité est située au niveau de cette face opposée. La couche de nanofils 4 assure une fonction optique de miroir vis-à-vis du rayonnement lumineux émis en direction de la face avant, ce qui permet de maximiser l'intensité du signal optique de sortie en évitant que des photons ne soient perdus en étant transmis dans l'enceinte sous vide.

On comprend donc que le rendement global du dispositif cathodoluminescent dépend :
- du taux de transmission électronique de la couche de nanofils ;
- de l'efficacité énergétique de la couche luminescente, définie comme la densité de probabilité de formation de paires électron-trou à partir des électrons énergétiques transmis dans la couche luminescente ;
- de l'efficacité quantique de luminescence définie comme la densité de probabilité de recombinaison radiative à l'origine de l'émission de lumière ;
- et du taux de collection optique.

Dans l'exemple de l'art antérieur mentionné précédemment, l'utilisation d'une couche d'aluminium pleine, c'est-à-dire d'une couche dont l'aluminium s'étend continûment suivant les trois dimensions de la couche réflectrice, entraîne un taux de collecte optique important mais au détriment du taux de transmission électronique. De plus, la couche métallique étant pleine, les électrons incidents perdent nécessairement de l'énergie cinétique lors de la transmission de la couche réflectrice, ce qui vient dégrader encore le taux de transmission électronique.

A la différence de la couche d'aluminium utilisée dans les exemples de l'art antérieur, par la couche réflectrice de nanofils métalliques située sur la face avant de la couche luminescente, on est en mesure d'améliorer le rendement global du dispositif cathodoluminescent en optimisant à la fois le taux de collection optique et le taux de transmission électronique.

Selon un deuxième mode de réalisation, la couche de nanofils électriquement conducteurs est adaptée à former une électrode de polarisation et d'évacuation des charges résiduelles. Pour cela, la couche de nanofils forme un réseau percolant de nanofils dont on peut mesurer la conductivité électrique. Par réseau percolant de nanofils, on entend que suffisamment de nanofils sont en contact les uns avec les autres pour qu'un courant électrique puisse traverser la couche. Ainsi, on peut imposer un potentiel électrique à la couche de nanofils pour, d'une part, générer un champ électrique d'orientation et d'accélération des électrons incidents en direction de la couche de nanofils, et d'autre part, évacuer les charges résiduelles négatives présentes dans la couche luminescente.

Les nanofils sont ici réalisés en un matériau métallique, de préférence choisi parmi Ag, Cu, Au, Pt, Pd, Ni, Co, Rh, In, Ru, Fe, CuNi, et les mélanges de deux ou plus de ces matériaux, et de préférence encore choisi parmi Ag, Au ou Cu. Les nanofils peuvent être réalisés en un matériau non métallique, tel que, par exemple, l'ITO ou l'AZO.

Il est avantageux que la résistance par carré (*sheet résistance,* en anglais) de la couche de nanofils soit inférieure ou égale à 500Ω/sq (également noté 500Ω/□), et de préférence inférieure ou égale à 100 Ω/sq, voire inférieure ou égale à 20 Ω/sq. Pour cela, on forme une couche de nanofils dont la longueur des fils est supérieure à l'épaisseur moyenne de la couche, de manière à ce que les nanofils s'étendent principalement dans le plan de la couche. L'épaisseur moyenne de la couche peut être comprise entre 1nm et 1µm, de préférence entre 5nm et 500nm, et être de l'ordre de quelques diamètres de nanofils. A titre d'exemple, pour des nanofils de 60nm de diamètre, l'épaisseur moyenne de la couche réflectrice est de l'ordre de 300nm.De plus, on réalise des nanofils dont le rapport d'aspect longueur L sur diamètre D est supérieur ou égal à 10, et de préférence supérieur ou égal à 100.

Ainsi, on forme une couche de nanofils de grand rapport d'aspect qui s'étendent longitudinalement essentiellement dans le plan de la couche de nanofils. On maximise ainsi les contacts entre les nanofils, propices à diminuer la résistance par carré de la couche de nanofils à une valeur inférieure ou égale à 500 Ω/sq, et de préférence inférieure ou égale à 100 Ω/sq, et de préférence inférieure ou égale à 20 Ω/sq.

A titre illustratif, une couche de nanofils d'argent de 65nm de diamètre et de 10µm de longueur avec une densité surfacique de l'ordre de 0.1, voire de l'ordre de 0.2, présente une résistance par carré de 20 Ω/sq.

En fonctionnement, la couche de nanofils forme une électrode de polarisation dont le potentiel électrique est appliqué à partir d'une source de potentiel. Ainsi, un champ électrique est formé entre la couche de nanofils et la source d'électrons. Les électrons sont alors orientés et accélérés par le champ électrique ainsi créé.

Une densité surfacique AF de nanofils supérieure ou égale à 0.2 permet d'obtenir une faible résistance par carré, par exemple de l'ordre de 100 Ω/sq, voire de 20 Ω/sq. De plus, une densité surfacique AF inférieure à 1 permet en outre d'optimiser le taux de transmission électronique selon le principe décrit précédemment. Cela permet d'améliorer le rendement global du dispositif cathodoluminescent.

Selon une variante de ce deuxième mode de réalisation, la couche de nanofils assure en outre la fonction de réflexion optique décrite précédemment. Pour cela, les nanofils sont réalisés en un matériau métallique, de préférence choisi parmi Ag, Cu, Au, Pt, Pd, Ni, Co, Rh, In, Ru, Fe, CuNi, et les mélanges de deux ou plus de ces matériaux, et de préférence encore choisi parmi Ag, Au ou Cu.

De préférence, la densité surfacique de nanofils est comprise entre 0.2 et 1, et avantageusement inférieure à 1 pour augmenter le taux de transmission électronique tout en maintenant une réflectance optique suffisante. Une densité surfacique comprise entre 0.2 et 0.5 assure ainsi une réflectance suffisante ainsi qu'un taux de transmission électronique important.

Selon un troisième mode de réalisation, la couche de nanofils peut être adaptée pour magnifier le rendement global du dispositif cathodoluminescent en provoquant une émission de lumière supplémentaire, par photoluminescence, à l'intérieure de la couche luminescente.

Pour cela, les nanofils sont adaptés pour émettre un rayonnement lumineux dans une première longueur d'onde inférieure à la longueur d'onde de luminescence de la couche luminescente. Ainsi, les nanofils métalliques présentent de préférence un diamètre moyen inférieur à 200nm et le champ électrique entre la source d'électrons et la couche de nanofils est de préférence de l'ordre de quelques kilovolts.

Ainsi, en fonctionnement, les électrons incidents, en traversant la couche de nanofils, peuvent exciter des modes plasmoniques des nanofils dont un mode résonnant peut conduire à l'émission d'un rayonnement lumineux dans une longueur d'onde inférieure à la longueur d'onde de luminescence. Ainsi, les photons émis par les nanofils par effet plasmonique peuvent être absorbés dans la couche luminescente, dans la mesure où l'énergie des photons émis par les nanofils est supérieure à l'énergie de gap du matériau luminescent. La couche luminescente émet ensuite un rayonnement lumineux par photoluminescence. On obtient ainsi un mécanisme supplémentaire d'émission de lumière par photoluminescence qui vient s'ajouter au mécanisme principal d'émission de lumière par cathodoluminescence, ce qui permet d'augmenter encore le rendement global du dispositif cathodoluminescent.

Les nanofils sont réalisés en un matériau électriquement conducteur, par exemple en un matériau métallique, de préférence choisi parmi Ag, Cu, Au, Pt, Pd, Ni, Co, Rh, In, Ru, Fe, CuNi, et les mélanges de deux ou plus de ces matériaux, et de préférence encore choisi parmi Ag, Au ou Cu. Les nanofils peuvent être réalisés en un matériau non métallique, tel que, par exemple l'ITO (pour *Indium tin oxide,* en anglais), ou l'AZO (pour *aluminium doped zinc oxide,* en anglais).

La couche luminescente est réalisée en un matériau dont la longueur d'onde de luminescence est supérieure à la longueur d'onde d'émission des nanofils par effet plasmonique. Il peut ainsi s'agir d'un matériau choisi parmi :
- les matériaux aptes à produire une couleur d'émission rouge, en particulier : Y2O3:Eu, YVO4:Eu, Y2O2S:Eu, ZnCdS:Ag,In, ZnCdS:Ag, In+SnO2, LaInO3:Eu ;
- les matériaux aptes à produire une couleur d'émission verte, en particulier : ZnO:Zn, ZnO:Zn,Si,Ga, (ZnMg)O:Zn, Gd3Ga5Oi2:Tb, Y2(AlGa)5Oi2:Tb, Y3Al5Oi2 :Tb, Y202S:Tb, ZnS:Cu,Al, ZnCdS:Cu,Al, ZnGa2O4:Mn, ZnSiO4:Mn, Gd2O2S:Tb, SiGa2S4:Eu, Y3Al5O2:Ce ;
- les matériaux aptes à produire une couleur d'émission bleue, en particulier : ZnS:Ag,Cl, ZnS:Ag,Cl,Al, ZnS:Ag, ZnS:Zn , ZnS:Te, ZnGa2O4 et Y2SiO5:Ce ;
et leurs mélanges. Bien entendu, l'homme du métier est à même de combiner différents matériaux fluorescents et de varier leurs proportions, au regard de la couleur d'émission souhaitée pour le dispositif cathodoluminescent.

A titre d'exemple, un faisceau d'électrons dans un champ électrique de 6kV entre la source d'électrons et la couche de nanofils, de 200 électrons par seconde, permet d'exciter des nanofils d'argent de diamètre de 60nm et de longueur de 2µm qui émettent en réponse un rayonnement lumineux à 350nm de longueur d'onde. Ces photons émis par les nanofils sont transmis dans la couche luminescente dont une partie est absorbé par le matériau luminescent qui émet un rayonnement lumineux à sa longueur d'onde de luminescence à 520nm dans le cas du phosphore de composition P22.

En variante de ce mode de réalisation, la couche de nanofils peut également assurer la fonction de réflexion optique et/ou celle d'électrode de polarisation et d'évacuation des charges décrites précédemment.

Un exemple de procédé de réalisation d'un dispositif cathodoluminescent est maintenant décrit, dans le cas d'une couche de nanofils d'argent.

On réalise tout d'abord des nanofils d'argent en solution. Pour cela, on additionne 1,766g de PVP (polyvinylpyrrolidone) à 2,6mg de NaCl (chlorure de sodium) dans 40ml d'EG (éthylèneglycol). On agite le mélange à 600rpm à 120°C jusqu'à obtenir une dissolution complète du PVP et du NaCl. A l'aide d'une ampoule de coulée, on ajoute goutte à goutte ce mélange à une solution de 40 ml d'EG dans laquelle sont dissous 0,68 g de AgNO3 (nitrate d'argent). On chauffe le bain d'huile à 160°C et on laisse agiter à 700 rpm pendant 80 minutes. Trois lavages sont réalisés au méthanol en centrifugeant à 2000 rpm (tours par minute) pendant 20 min, puis les nanofils sont précipités à l'acétone et enfin redispersés dans de l'eau ou du méthanol.

L'élaboration de la couche de nanofils est réalisée par spray de la solution de nanofils métalliques à 0,5g/L dans le méthanol sur une couche luminescente de type céramique à base d'oxyde, sulfate ou phosphate en utilisant un spray Sonotek. La couche luminescente peut être en un matériau de référence P43 en Gd2O2S:Tb, ou de référence P22 formé d'un mélange des matériaux ZnS:Ag, (ZnCd)S:Cu, Y2O2S:Eu.

Pour des nanofils d'argent longs typiquement jusqu'à 10µm pour un diamètre de 65nm, et avec une masse surfacique de nanofils de 33mg/m2, on obtient une couche de nanofils de densité surfacique de l'ordre de 0,1 pour une résistance par carré de l'ordre de 20 Ω/sq. La réflectance optique est de l'ordre de 13% et la transmission électronique de l'ordre de 87%. Pour des nanofils d'argent plus courts de 2µm de longueur pour 65nm de diamètre et un taux de charge allant de 10 à 50mg/m2, on obtient une couche de nanofils de densité surfacique allant de 0,02 à 0,1 et la résistance par carré est de l'ordre de 100Ω/sq. La densité surfacique des nanofils peut être ajustée en augmentant la masse surfacique lors de la fabrication des nanofils, notamment en évaporant une quantité prédéterminée de solvant, voire en réalisant plusieurs dépôts successifs de couches de nanofils de densité surfacique donné.

Les dimensions de longueur et de diamètre des nanofils peuvent être mesurées en microscopie électronique à balayage (MEB). Il est également possible d'estimer la densité surfacique des nanofils à partir d'une image obtenue par MEB. La densité surfacique des nanofils peut également être estimée à partir du diamètre D des nanofils et de la masse surfacique T en utilisant la relation AF = 4/(n.p).(T/D), où p est la masse volumique du matériau du nanofil. La masse surfacique peut être estimée via une détermination de la surface recouverte par les fils pour une surface de référence, à partir d'une image en microscopie électronique.

La résistance par carré de la couche de nanofils peut être mesurée de manière classique, par exemple par un résistivimètre quatre pointes de type Loresta EP. La réflectance de la couche de nanofils peut être estimée par spectrométrie, par exemple à l'aide d'un spectrophomètre Varian Cary 500.

## Revendications

1. Dispositif cathodoluminescent (1), comportant :
une couche luminescente (2) présentant une première face (3), dite face avant, destinée à recevoir des électrons incidents, ladite couche luminescente (2) étant adaptée à absorber des électrons incidents et à émettre en réponse un rayonnement lumineux,
**caractérisé en ce que** la face avant (3) de la couche luminescente (2) est revêtue d'une couche comportant des nanofils (4) électriquement conducteurs.

2. Dispositif cathodoluminescent (1) selon la revendication 1, dans lequel la couche de nanofils (4) présente une densité surfacique de nanofils comprise entre 0.2 et 1, et de préférence inférieure à 1.

3. Dispositif cathodoluminescent (1) selon la revendication 1 ou 2, dans lequel la couche de nanofils (4) est formée d'un réseau percolant de nanofils électriquement conducteurs, et est destinée à être électriquement connectée à une source de potentiel électrique.

4. Dispositif cathodoluminescent (1) selon la revendication 3, dans lequel la couche de nanofils (4) présente une résistance par carré inférieure ou égale à 500Ω/sq, et de préférence inférieure ou égale à 100Ω/sq.

5. Dispositif cathodoluminescent (1) selon l'une quelconque des revendications 1 à 4, dans lequel la longueur moyenne des nanofils est supérieure à l'épaisseur moyenne de la couche de nanofils (4).

6. Dispositif cathodoluminescent (1) selon l'une quelconque des revendications 1 à 5, dans lequel les nanofils présentent un rapport d'aspect, défini comme le rapport entre une longueur moyenne sur un diamètre moyen, supérieur ou égal à 10, et de préférence supérieur ou égal à 100.

7. Dispositif cathodoluminescent (1) selon l'une quelconque des revendications 1 à 6, dans lequel les nanofils sont réalisés en un matériau métallique choisi parmi l'or, l'argent et le cuivre ou en un matériau choisi parmi l'ITO et l'AZO.

8. Dispositif cathodoluminescent (1) selon l'une quelconque des revendications 1 à 7, dans lequel les nanofils sont adaptés à émettre un rayonnement lumineux dans une première longueur d'onde lorsqu'ils sont excités par lesdits électrons incidents, et la couche luminescente est adaptée à absorber un rayonnement lumineux émis par les nanofils dans une première longueur d'onde et à émettre en réponse un rayonnement lumineux à une seconde longueur d'onde dite de luminescence supérieure à ladite première longueur d'onde.

9. Dispositif cathodoluminescent (1) selon l'une quelconque des revendications 1 à 8, comprenant en outre une source d'électrons adaptée à émettre un faisceau d'électrons en direction de la face avant (3) de la couche luminescente (2).

## Patentansprüche

1. Kathodolumineszenzvorrichtung (1), umfassend:
eine lumineszierende Schicht (2), die eine erste Seite (3), Vorderseite genannt, aufweist, die dazu bestimmt ist, einfallende Elektronen aufzunehmen, wobei die lumineszierende Schicht (2) dazu eingerichtet ist, einfallende Elektronen zu absorbieren und in Reaktion darauf eine Lichtstrahlung auszusenden,
**dadurch gekennzeichnet, dass** die Vorderseite (3) der lumineszierenden Schicht (2) mit einer Schicht überzogen ist, die elektrisch leitfähige Nanodrähte (4) umfasst.

2. Kathodolumineszenzvorrichtung (1) nach Anspruch 1, wobei die Schicht von Nanodrähten (4) eine Oberflächendichte der Nanodrähte aufweist, die zwischen 0,2 und 1 liegt und vorzugsweise kleiner als 1 ist.

3. Kathodolumineszenzvorrichtung (1) nach Anspruch 1 oder 2, wobei die Schicht von Nanodrähten (4) von einem perkolierenden Netzwerk elektrisch leitfähiger Nanodrähte gebildet wird und dazu bestimmt ist, mit einer Quelle eines elektrischen Potentials verbunden zu werden.

4. Kathodolumineszenzvorrichtung (1) nach Anspruch 3, wobei die Schicht von Nanodrähten (4) einen Flächenwiderstand aufweist, der kleiner oder gleich 500 Ω/sq und vorzugsweise kleiner oder gleich 100 Ω/sq ist.

5. Kathodolumineszenzvorrichtung (1) nach einem der Ansprüche 1 bis 4, wobei die mittlere Länge der Nanodrähte größer als die mittlere Dicke der Schicht von Nanodrähten (4) ist.

6. Kathodolumineszenzvorrichtung (1) nach einem der Ansprüche 1 bis 5, wobei die Nanodrähte ein als das Verhältnis zwischen einer mittleren Länge und einem mittleren Durchmesser definiertes Aspektverhältnis aufweisen, das größer oder gleich 10 und vorzugsweise größer oder gleich 100 ist.

7. Kathodolumineszenzvorrichtung (1) nach einem der Ansprüche 1 bis 6, wobei die Nanodrähte aus einem metallischen Material hergestellt sind, welches aus Gold, Silber und Kupfer ausgewählt ist, oder aus einem Material, welches aus ITO und AZO ausgewählt ist.

8. Kathodolumineszenzvorrichtung (1) nach einem der Ansprüche 1 bis 7, wobei die Nanodrähte dazu eingerichtet sind, eine Lichtstrahlung mit einer ersten Wellenlänge auszusenden, wenn sie von den einfallenden Elektronen erregt werden, und die lumineszierende Schicht dazu eingerichtet ist, eine von den Nanodrähten ausgesendete Lichtstrahlung mit einer ersten Wellenlänge zu absorbieren und in Reaktion darauf eine Lichtstrahlung mit einer zweiten Wellenlänge, Lumineszenzwellenlänge genannt, auszusenden, die größer als die erste Wellenlänge ist.

9. Kathodolumineszenzvorrichtung (1) nach einem der Ansprüche 1 bis 8, welche außerdem eine Elektronenquelle umfasst, die dazu eingerichtet ist, ein Elektronenbündel in Richtung der Vorderseite (3) der lumineszierenden Schicht (2) auszusenden.

## Claims

1. Cathodoluminescent device (1), including:
a luminescent layer (2) having a first side (3), called the front side, that is intended to receive incident electrons, said luminescent layer (2) being suitable for absorbing incident electrons and for emitting light radiation in response,
**characterized in that** the front side (3) of the luminescent layer (2) is coated with a layer (4) including electrically conductive nanowires.

2. Cathodoluminescent device (1) according to Claim 1, wherein the nanowire layer (4) has a nanowire area fraction comprised between 0.2 and 1 and preferably lower than 1.

3. Cathodoluminescent device (1) according to Claim 1 or 2, wherein the nanowire layer (4) is formed from a perculating network of electrically conductive nanowires and is intended to be electrically connected to a source of electrical potential.

4. Cathodoluminescent device (1) according to Claim 3, wherein the nanowire layer (4) has a sheet resistance lower than or equal to 500 Ω/sq and preferably lower than or equal to 100 Ω/sq.

5. Cathodoluminescent device (1) according to any one of Claims 1 to 4, wherein the average length of the nanowires is larger than the average thickness of the nanowire layer (4).

6. Cathodoluminescent device (1) according to any one of Claims 1 to 5, wherein the nanowires have an aspect ratio, defined as the ratio of an average length to an average diameter, higher than or equal to 10 and preferably higher than or equal to 100.

7. Cathodoluminescent device (1) according to any one of Claims 1 to 6, wherein the nanowires are produced from a metal chosen from gold, silver and copper or from a material chosen from ITO and AZO.

8. Cathodoluminescent device (1) according to any one of Claims 1 to 7, wherein the nanowires are suitable for emitting light radiation at a first wavelength when they are excited by said incident electrons, and the luminescent layer is suitable for absorbing light radiation emitted by the nanowires at a first wavelength and for emitting in response light radiation at a second what is called luminescent wavelength longer than said first wavelength.

9. Cathodoluminescent device (1) according to any one of Claims 1 to 8, furthermore comprising an electron source suitable for emitting a beam of electrons in the direction of the front side (3) of the luminescent layer (2).
